# EUROPÄISCHE PATENTANMELDUNG

(11) **EP 1 298 875 A1**
(43) Veröffentlichungstag der Anmeldung: **02.04.2003**
(21) Anmeldenummer: 01123080.2
(22) Anmeldetag: 26.09.2001
(51) Int. Cl.: H04L 27/26, H04L 25/03

(54) **OFDM-übertragung mit einem Blockschutzzeitintervall**

(71) Anmelder: SIEMENS AKTIENGESELLSCHAFT, 80333 München (DE)
(72) Erfinder: Götze, Jürgen, Prof., 44229 Dortmund (DE); Haardt, Martin, Dr., 98716 Geraberg (DE); Sinn, Christian Vincent, 44149 Dortmund (DE)

(57) **Zusammenfassung**

Verfahren zum Übertragen von Informationen in einem FunkKommunikationssystem mit mindestens einer Sendestation und mindestens einer Empfangsstation, welche über eine Funkschnittstelle miteinander verbunden sind, wobei die Übertragung der Informationen in Symbolen mittels eines Vielfachträger-Verfahrens über orthogonale, frequenzseparierte Unterträger erfolgt, in dem während einer Symbolzeit zeitlich parallel Nutzinformationen auf die Unterträger moduliert werden. Erfindungsgemäß werden eine Mehrzahl von Symbolen (S1_{B1} - S6_{B1}, S7_{B2} - S9_{B2}) zu einem Block (B1, B2) zusammengefasst und jeweils einem Block wird ein Schutzzeitintervall (GP_{B1}, GP_{B2}) angefügt. Vorzugsweise wird senderseitig zumindest in einem Teil des Schutzzeitintervalles (GP_{B1}, GP_{B2}) zumindest ein Teil des Blocks (B1, B2) insbesondere in zyklischer Ausdehnung wiederholt.

## Beschreibung

Die Erfindung betrifft ein Verfahren zum Übertragen von Informationen in einem Funk-Kommunikationssystem mit mindestens einer Sendestation und mindestens einer Empfangsstation, welche über eine Funkschnittstelle miteinander verbunden sind, nach dem Oberbegriff des Anspruchs 1.

In Funk-Kommunikationssystemen werden Informationen (beispielsweise Sprache, Bildinformation oder andere Daten) mit Hilfe von elektromagnetischen Wellen über eine Funkschnittstelle zwischen einer Basisstation und einer Mobilstation übertragen. Das Abstrahlen der elektromagnetischen Wellen erfolgt dabei mit Trägerfrequenzen, die in dem für das jeweilige System vorgesehenen Frequenzband liegen.

Das Grundprinzip der Vielfachträger-Verfahren besteht darin, hochratige Informationsströme auf eine Anzahl von Strömen mit niedrigerer Rate aufzuteilen. Diese Ströme mit niedrigerer Rate werden simultan über eine Anzahl von Unterträgern übertragen. Bei dieser Übertragung treten Intersymbol-Interferenz (Inter Symbol Interference, ISI) und ein Übersprechen der Unterträger (Inter Carrier Interference, ICI) auf. Eine Möglichkeit dem Übersprechen der Unterträger zu begegnen, besteht darin, orthogonale, frequenzseperierte Unterträger zu verwenden. Intersymbol-Interferenzen können in der Regel dadurch gänzlich eleminiert werden, dass zu jedem Symbol ein Schutzzeitintervall (Guard Period) angefügt wird. Im Schutzzeitintervall wird das Symbol zyklisch ausgedehnt, um ein Übersprechen der Unterträger zu vermeiden. Wenn ein Übersprechen der Unterträger vorhanden ist, bedeutet dies, dass die Unterträger nicht zu einander orthogonal sind.

Die Übertragung der Informationen erfolgt in Symbolen mittels eines Vielfachträger-Verfahrens über orthogonale, frequenzseparierte Unterträger, in dem während einer Symbolzeit zeitlich parallel Nutzinformationen auf die Unterträger moduliert werden.

Bei Funk-Kommunikationssystemen mit Vielfachzugriffsverfahren (Multiple Access, MA) kann der Zugriff von Stationen auf ein gemeinsames Übertragungsmedium auf unterschiedliche Art und Weise erfolgen. Für den Vielfachzugriff kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Stationen aufgeteilt werden.

Eine Variante des Vielfachträger-Verfahrens mit orthogobalen, frequenzseperierten Unterträgern stellt das OFDM-Verfahren dar (Orthogonal Frequency Division Multiplex). Die Intersymbol-Interferenz wird hervorgerufen durch Mehrwegeausbreitungen.

Im Weiteren wird das Vielfachträger-Verfahren am Beispiel des OFDM-Verfahrens näher betrachtet. Bei der OFDM basierten Informationsübertragung in Funkkommunikationssystemen entsteht ein OFDM-Symbol, in dem Nutzdaten auf Unterträger moduliert werden. Dies geschieht durch Anwendung der Inversen Fast-Fourier-Transformation (IFFT) auf die Nutzdaten. Anschließend wird entweder ein zyklisches Präfix (Cyclic Prefix, CP) vor jedes Symbol gestellt oder es werden 0-Informationen an jedes Symbol angehängt (Zero Padding, ZP). Durch Mehrwegeausbreitung im Funkkanal können nachfolgende OFDM-Symbole interferieren.

Um die Nutzdaten aus den empfangenen Daten zurück zu gewinnen, können folgende Methoden genutzt werden: Im CP-Fall werden Teile des empfangenen OFDM-Symbols ignoriert, so dass benachbarte OFDM-Symbole möglichst interferenzfrei sind. Auf die verbleibenden Daten eines OFDM-Symbols wird die Fast-Fourier-Transformation (FFT) angewendet und anschließend durch den Wert der Übertragungsfunktion des Funkkanals an der jeweiligen Unterträgerfrequenz geteilt. Damit können die Nutzdaten zurück gewonnen werden.

Der ZP-Fall kann durch geeignetetes Anfügen der Empfangsdaten auf den CP-Fall zurüchgeführt werden, so dass die Daten auf die gleiche Weise zurück gewonnen werden können. Weiterhin können im ZP-Fall die Nutzdaten durch Lösen eines überbestimmten Gleichungssystems anhand geeigneter Kriterien - wie beispielsweise Least Squares (LS) oder Minimum Mean Square Error (MMSE) - geschätzt werden.

Der Nutzen des CP liegt darin, dass benachbarte OFDM-Symbole nicht interferieren und die Unterträger nicht übersprechen, wenn das CP lang genug gewählt wird, dass heißt zumindest solange wie die maximale Kanalverzögerung (Delay Spread, DS). Weiterhin wird eine rechnerisch sehr effiziente Datenschätzung möglich. Gleiches gilt für den ZP-Fall.

Die Einfügung von Schutzzeitintervallen wie im Fall von CP oder ZP führen zu einer Verringerung der effektiven Datenrate der Nutzinformationen. Weiterhin wird im Fall des CP ein erheblicher Teil der Sendeleistung zum Senden eines CP verwendet, was besonders in mobilen Übertragungsverfahren unerwünscht ist. In Funksystemen nach Hiperlan/2 (High Performance Radio Local Area Network Type 2) macht das CP 20% der OFDM-Symbolzeit aus.

Der Erfindung liegt daher die Aufgabe zugrunde, ein Verfahren, Sende- und Empfangsstationen der eingangs genannten Art aufzuzeigen, mit denen eine Erhöhung der effektiven Übertragungsrate ermöglicht wird.

Diese Aufgabe wird für das Verfahren durch die Merkmale des Anspruchs 1 gelöst. Ausgestaltungen und Weiterbildungen der Erfindung sind Gegenstand der Unteransprüche.

Erfindungsgemäß werden eine Mehrzahl von Symbolen zu einem Block zusammengefasst und jeweils einem Block wird ein Schutzzeitintervall angefügt.

Im Rahmen der Erfindung kann die Anzahl der zu einem Block zusammengefassten Symbole variabel oder gleich sein, dass heißt die Blocklänge kann unregelmäßig oder regelmäßig ausgebildet sein.

Durch die erfindungsgemäße Zuordnung eines Schutzzeitintervalles zu einer Mehrzahl von Symbolen, nämlich einem Block, kann die zur Übertragung von Nutzinformationen zur Verfügung stehende Zeit merklich erhöht werden. Dabei nützt die Erfindung aus, dass die Symbolinterferenz und das Übersprechen der Unterkanäle blockweise sehr effektiv im Frequenzbereich korrigiert werden können.

Mit Vorteil wird senderseitig zumindest in einem Teil des Schutzzeitintervalles zumindest ein Teil des Blocks wiederholt. Senderseitig kann danach in einem Teil des Schutzzeitintervalls zumindest ein Teil des Blocks wiederholt werden. Bevorzugt wird jedoch senderseitg im gesamten Schutzzeitintervall zumindest ein Teil des Blocks wiederholt.

Mit Vorteil besteht die Wiederholung des zumindest einen Teils des Blocks im Schutzintervall aus einer zyklischen Ausdehnung (Erweiterung) des Blocks. Das bedeutet, dass zumindest für einen Teil des Schutzzeitintervalls das oben erwähnte CP angewandt wird.

Senderseitig können zumindest in einem Teil des Schutzzeitintervalls 0-Informationen übertragen werden, dass heißt zumindest für einen Teil des Schutzzeitintervalles wird das oben erwähnte ZP angewandt.

In Weiterbildung der Erfindung wird das Schutzzeitintervall kürzer als die Symbolzeit gewählt. Bevorzugt beträgt dabei das Schutzzeitintervall zwischen 5 und 50 %, besonders bevorzugt zwischen 10 und 30 % der Symbolzeit. Dies dient der Steigerung der effektiven Datenrate der Informationsübertragung.

In Weiterbildung der Erfindung werden empfangsseitig die gegebenenfalls vorhandenen 0-Informationen im Schutzzeitintervall durch eine zyklische Ausdehnung eines Teils des Blocks ersetzt. Auf diese Weise kann der ZP-Fall auf den CP-Fall zurückgeführt werden.

In Ausgestaltung der Erfindung wird der empfangene Block mit der inversen zyklischen Kanalmatrix des Blocks multipliziert. Auf diese Weise kann die Symbolinterferenz und das Übersprechen der Unterträger für einen gesamten Block durch Kanalentzerrung eliminiert.

Insbesondere kann die zyklische Kanalmatrix eines auch das Schutzintervall umfassenden Blocks im Frequenzraum durch Eigenwertzerlegung einer zyklischen Matrix invertiert werden, wobei die Diagonalelemente der Matrix durch eine Fast-Fourier-Transformation der Kanalimpulsantwort gebildet werden. Dabei entsprechen die Diagonalelemente der Matrix der ersten Zeile der Kanalfaltungsmatrix.

Das Produkt aus der Anzahl der Unterträger und der Anzahl der Symbole in einem Block kann mit Vorteil kleiner als die Stützzahl der Fast-Fourier-Transformation gewählt werden. Die Stützzahl ergibt sich dabei aus dem Wertebereich von 2ⁿ, wobei n für eine natürliche Zahl steht. Insbesondere kann als Stützzahl ein Wert von 512, bevorzugt von 1024, besonders bevorzugt von 2048, eingesetzt werden.

Die Erfindung kann insbesondere in Verbindung mit Vielfachträger-Verfahren zum Einsatz gelangen, die auf dem OFDM-Verfahren beruhen. Dies trifft insbesondere auf Funksysteme zu, die unter der Standardbezeichnung Hiperlan/2, IEEE 802.11a (Institute of Electrical and Electronical Engineering), HiSWAN-A oder DVB (Digital Video Broadcast) bekannt sind.

Einzelheiten und Details der Erfindung werden nachfolgend anhand von Zeichnungen und einem darin dargestellten Ausführungsbeispiel näher erläutert.

Hierbei zeigen :
- Figur 1:: die schematische Darstellung der Struktur einer OFDM-Übertragung nach dem Stand der Technik und
- Figur 2:: eine schematische Darstellung der Struktur der OFDM-Übertragung aus Figur 1 unter Anwendung der Erfindung.

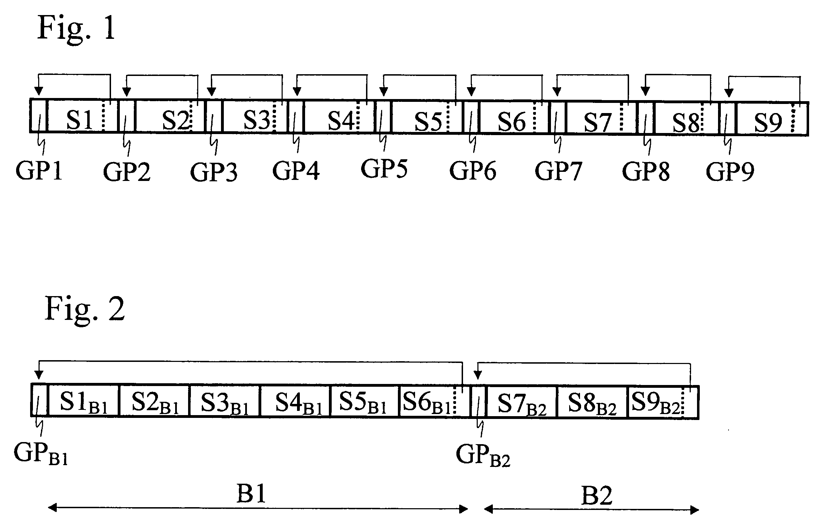

In Figur 1 sind die Nutzdaten enthaltenen Symbole S1 bis S9 dargestellt, wobei symbolweise die zugehörigen Schutzzeitintervalle GP1 bis GP9 vorangestellt sind. Die Schutzzeitintervalle GP können wie im in Figur 1 gezeigten Falle von CP zyklische Erweiterungen der Symbole S1 bis S9 enthalten. Die Schutzintervalle GP1 bis GP9 könnten für den Fall ZP 0-Informationen aufweisen (nicht dargestellt).

Das in Figur 2 wiedergegebene Schema zeigt eine mögliche Umsetzung der Erfindung des in Figur 1 dargestellten Beispiels. Dabei sind die Symbole S1_{B1} bis S6_{B1} im Block B1 zusammengefasst. Dem gesamten Block B1 ist im Unterschied zu dem in Figur 1 dargestellten Beispiel lediglich ein Schutzzeitintervall GP_{B1} vorangestellt. Den im Block B2 zusammengefassten Symbolen S7_{B2} bis S9_{B2} ist ein Schutzzeitintervall GP_{B2} vorangestellt. Die Schutzzeitintervalle GP_{B1} und GP_{B2} enthalten beispielsweise die zugehörigen zyklischen Ausdehnungen der Blöcke B1 und B2.

Im in Figur 2 dargestellten Fall wird die identische Nutzinformation in kürzerer Zeit übertragen als im Beispiel nach figur 1. Damit ist im in Figur 2 gezeigten Beispielsfall die effektive Datenrate der Informationsübertragung höher als bei der Übertragung nach Figur 1.

## Patentansprüche

1. Verfahren zum Übertragen von Informationen in einem Funk-Kommunikationssystem mit mindestens einer Sendestation und mindestens einer Empfangsstation,
welche über eine Funkschnittstelle miteinander verbunden sind,
wobei die Übertragung der Informationen in Symbolen (S1 - S9) mittels eines Vielfachträger-Verfahrens über orthogonale, frequenzseparierte Unterträger erfolgt,
in dem während einer Symbolzeit zeitlich parallel Nutzinformationen auf die Unterträger moduliert werden, **dadurch gekennzeichnet,**
**dass** eine Mehrzahl von Symbolen (Si_{B1} - S6_{B1}, S7_{B2} - S9_{B2}) zu einem Block (B1, B2) zusammengefasst werden und jeweils einem Block (B1, B2) ein Schutzzeitintervall (GP_{B1}, GP_{B2}) angefügt wird.

2. Verfahren nach Anspruch 1, **dadurch gekennzeichnet, dass** senderseitig zumindest in einem Teil des Schutzzeitintervalles (GP_{B1}, GP_{B2}) zumindest ein Teil des Blocks (B1, B2) wiederholt wird.

3. Verfahren nach Anspruch 2, **dadurch gekennzeichnet, dass** senderseitig im gesamten Schutzzeitintervall (GP_{B1}, GP_{B2}) zumindest ein Teil des Blocks (B1, B2) wiederholt wird.

4. Verfahren nach Anspruch 2 oder 3, **dadurch gekennzeichnet, dass** die Wiederholung des zumindest einen Teils des Blocks (B1, B2) im Schutzzeitintervall (GP_{B1}, GP_{B2}) aus einer zyklischen Ausdehnung des Blocks (B1, B2) besteht.

5. Verfahren Verfahren nach einem der Ansprüche 1, 2 oder 4, **dadurch gekennzeichnet, dass** senderseitig zumindest in einem Teil des Schutzzeitintervalles (GP_{B1}, GP_{B2}) 0-Informationen übertragen werden.

6. Verfahren nach einem der Ansprüche 1 bis 5, **dadurch gekennzeichnet, dass** das Schutzzeitintervall (GP_{B1}, GP_{B2}) kürzer als die Symbolzeit gewählt wird, bevorzugt zwischen 5 und 50 %, besonders bevorzugt zwischen 10 und 30 % der Symbolzeit beträgt.

7. Verfahren nach einem der Ansprüche 1 bis 6, **dadurch gekennzeichnet, dass** empfangsseitig gegebenenfalls vorhandene 0-Informationen im Schutzzeitintervall (GP_{B1}, GP_{B2}) durch eine zyklische Ausdehnung eines Teils des Blocks (B1, B2) ersetzt werden.

8. Verfahren nach einem der Ansprüche 1 bis 7, **dadurch gekennzeichnet, dass** der empfangene Block (B1, B2) mit der inversen zyklischen Kanalmatrix des Blocks (B1, B2) multipliziert wird.

9. Verfahren nach Anspruch 8, **dadurch gekennzeichnet, dass** die zyklische Kanalmatrix eines auch das Schutzintervall (GP_{B1}, GP_{B2}) umfassenden Blocks (B1, B2) im Frequenzraum durch Eigenwertzerlegung einer zyklischen Matrix invertiert wird, wobei die Diagonalelemente der Matrix durch eine Fast-Fourier-Transformation der Kanalimpulsantwort gebildet werden.

10. Verfahren nach einem der Ansprüche 1 bis 9, **dadurch gekennzeichnet, dass** das Produkt aus der Anzahl der Unterträger und der Anzahl der Symbole in einem Block (B1, B2) kleiner als die Stützzahl der Fast-Fourier-Transformation gewählt wird.

11. Sendestation zur Durchführung des Verfahrens nach einem der Ansprüche 1 bis 6.

12. Empfangsstation zur Durchführung des Verfahrens nach einem der Ansprüche 1, 7 bis 10.
